# EUROPEAN PATENT APPLICATION

(11) **EP 1 296 028 A1**
(43) Date of publication of application: **26.03.2003**
(21) Application number: 01941239.4
(22) Date of filing: 26.06.2001
(51) Int. Cl.: F01N 3/02, F01N 3/20

(54) **EXHAUST GAS PROCESSING METHOD AND DEVICE**

(30) Priority: 27.06.2000 JP 2000192541; 23.03.2001 JP 2001086048
(71) Applicant: Kawasaki Jukogyo Kabushiki Kaisha, Kobe-shi, Hyogo 650-8670 (JP)
(72) Inventor: TAKADA, Tomoaki, Minato-ku, Tokyo 108-0073 (JP); TSUTSUMI, Kazuo, Kobe-shi, Hyogo 651-2215 (JP); ITO, Hiroshi, Akashi-shi, Hyogo 674-0068 (JP); KINOUCHI, Sosuke, Kakogawa-shi, Hyogo 675-0101 (JP); MINAMI, Toru, Kakogawa-shi, Hyogo 675-0101 (JP)
(74) Representative: West, Alan Harry
(86) International application number: JP0105437
(87) International publication number: WO02001050

(57) **Abstract**

An exhaust gas treating device capable efficiently treating fine particles (g) such as a carbon solid contained in an exhaust gas (G) with a simple structure is adapted to introduce the exhaust gas (G) from below of a collector (6) in which capturing particles (5) for capturing fine particles (g) contained in the exhaust gas (G) of the engine (E) are deposited and discharge the exhaust gas (G) upwardly of the collector, thus treating the exhaust gas. In the exhaust gas treating device, the collector (6) is fluidized according to a balance between a pressure of the exhaust gas (G) and a gravity of the collector (6) and the fine particles (G) are combusted in the fluidized layer (F).

## Description

### [Technical Field]

The present invention relates to a method and device capable of efficiently treating fine particles such as a great quantity of carbon solid (soot) contained in an exhaust gas discharged from a combustion device such as a diesel engine, a gasoline engine, a gas turbine, a boiler, or an incinerator.

### [Background Art]

For instance, in a diesel engine, a large quantity of 1 µ m or less fine particles comprised of carbon solid are generated when a load fluctuates or the like and discharged together with an exhaust gas to atmosphere. Conventionally, the fine particles are collected by using a filter and combusted (Publication of Examined Utility Model Application No. Hei. 5 -13934).

The collecting means using the filter has the following disadvantages.

Since the fine particles collide with the filter and are thereby collected therein, they are collected only on the side of an exhaust gas inlet of the filter. Accordingly, there is a need for a film filter of a large area. The filter tends to be clogged. The collected fine particles are combusted at a high temperature. Since the filter forms an heat-insulating layer, it is increased to approximately 1000°C. Therefore, the filter is made of a temperature-resistant material such as ceramic fibers. This type of filter has low durability. Besides, since its cost is high, a running cost is increased.

When the fine particles collected by the filter are combusted, it is necessary to combust the particles at a high temperature and a high speed similarly to normal burner combustion. Since it is necessary to combust the collected fine particles while supplying a heated air to the filter, the collecting operation must be stopped and another filter must be used to collect particles during the combustion. For this reason, a batch type operation in which two or more filters are prepared and switching between them is performed becomes necessary.

When the fine particles are collected into the filter and combusted at a high temperature, they are carbonized and crystallized. So, when temperature is increased for the purpose of completely combusting the particles, SP 2 coupling (graphitization) progresses from approximately 800°C, and carbons are closely coupled and graphitized. When the carbons are graphitized, a combustion speed becomes low and time required for complete combustion becomes long.

The inventor or the like previously suggested an exhaust gas treating device of a centrifugal fluidized layer type that is capable of obviating the above-described disadvantages (WO 93 -24207 Publication). The treating device comprises an outer casing having an introducing pipe of the exhaust gas and a cylindrical fluidized catalyst layer reactor provided inside thereof. The reactor has a dispersing plate comprised of a porous cylinder for introducing the exhaust gas thereinto and is rotatable around a central axis of the dispersing plate. The reactor is filled with a powdered catalyst. An exhaust pipe for exhaust gas is connected coaxially with the central axis of the dispersing plate and protruded from the outer casing.

In the treating device, the fluidized catalyst layer reactor is rotated to cause the powdered catalyst in the reactor to be fluidized while being forcibly moved toward an inner surface of the dispersing plate by a centrifugal force. Meanwhile, the exhaust gas is introduced into the outer casing through the introducing pipe and then into the inside of the reactor through the dispersing plate by a gas pressure, where the exhaust gas makes contact with the fluidized catalyst and is combusted. The treated and purified exhaust gas is discharged to the outside from the outer casing through the exhaust pipe. According to this treating device, since the graphitization hardly occurs during combustion, the combustion speed is increased and the combustion time is shortened. Besides, the running cost becomes low and a continuous treating operation becomes possible without adopting the batch type.

In the above exhaust gas treating device, since it is necessary to drive the fluidized catalyst layer reactor to be rotated, its structure is complicated and its cost is increased. In addition, since it is necessary to always rotate the reactor during a low output operation as well as a high output operation. As a result, an energy loss is increased and efficiency is reduced.

### [Disclosure of the Invention]

Accordingly, an object of the present invention is to provide an exhaust gas treating method and device capable of efficiently treating solid fine particles containing carbon contained in an exhaust gas with a simple structure by improving a fluidized layer used as a combustor, a collector, a muffler, a reactor, or the like.

To achieve the above-described object, there is provided a method for treating an exhaust gas by introducing the exhaust gas from below to a collector in which capturing particles for capturing fine particles contained in the exhaust gas are deposited and discharging the exhaust gas upwardly of the collector, comprising: fluidizing the collector according to a balance between a pressure of the exhaust gas and a gravity of the collector and combusting the fine particles in a fluidized layer of the collector.

In the treating method, the exhaust gas is introduced from below to the collector and the fine particles contained in the exhaust gas are captured by the capturing particles. In this state, the capturing particles are fluidized according to a balance between a pressure of the exhaust gas and a gravity of the collector, that is, when the pressure exceeds the gravity, the capturing particles are fluidized, and the fine particles captured by the capturing particles make contact with residual oxygen contained in the exhaust gas and are thereby combusted over the entire fluidized layer. Thus, the exhaust gas is efficiently treated. Specifically, the fine particles (carbon solid) containing carbon are combusted and converted into carbon dioxide and water as non-hazardous substances, and the resulting purified exhaust gas is discharged to atmosphere. Since the combustion in the fluidized layer continues in a fluidized state until the fine particles are completely combusted, a high removal efficiency is achieved.

To be more detailed, during activation or idling of the engine, the pressure of the exhaust gas is low. So, the capturing particles become a fixed layer without being fluidized and are adapted to capture the fine particles. When the engine speed is increased and the pressure of the exhaust gas is increased, the capturing particles are fluidized, that is, the capturing particles are floatingly fluidized to be formed into a fluidized layer. Specifically, new capturing particles are circulated and sequentially make contact with the exhaust gas, thereby efficiently capturing the fine particles contained in the exhaust gas. Also, since the temperature of the exhaust gas is increased with an increase in the engine speed, the fine particles captured by the capturing particles are quickly combusted over the entire region of the fluidized layer.

Since the fluidized layer has a large heat capacity and a high heat transmission speed, generation of high-temperature heat and rapid temperature increase do not occur in the fluidized layer. For this reason, the combustion speed is not increased with an increase in temperature and the temperature is not increased with an increase in the combustion speed.
Besides, unlike the case where the fine particles are captured by the conventional filter and combusted, no hot spots are generated and a poor fluidization in which the fine particles are melted and solidified does not occur. Further, since it is not necessary to drive the reactor to be rotated unlike the exhaust gas treating device of a previously proposed rotation fluidized layer type, its structure is simplified and cost is low.

In the treating method of a preferred embodiment of the present invention, when a superficial velocity in a column of the exhaust gas in the fluidized layer (speed in the case where no fluidized substance (in this case, collector) exists and hereinafter simply referred to as "speed of the exhaust gas") is lower than a predetermined value required for fluidization of the collector by the exhaust gas, the capturing particles are adapted to capture the fine particles, and when the speed exceeds the predetermined value, the collector is fluidized by the exhaust gas and the fine particles are combusted in the fluidized layer. The predetermined value is, for example, set in a range of 0.1m/s-0.5m/s. Thereby, when the speed of the exhaust gas is lower than the predetermined value, the capturing particles become a fixed layer without being fluidized and capture the fine particles in the exhaust gas. When the speed of the exhaust gas exceeds the predetermined value, the capturing particles are fluidized and capture the fine particles contained in the exhaust gas. The fine particles captured by the capturing particles in the fluidized layer or the fixed layer are combusted in the fluidized layer.

When the capturing particles are fluidized, a casing accommodating the particles are worn out and the capturing particles themselves are wom out. However, as described above, by converting the capturing particles into the fixed layer or the fluidized layer based on the predetermined value, for example, by converting the capturing particles into the fixed layer during activation or idling of the engine when the amount of generated fine particles in the exhaust gas is relatively small and converting the capturing particles into the fluidized layer only when the amount of generated fine particles is large, such as an high output operating time of the engine, in order to minimum the time during which the capturing particles are being fluidized, thereby preventing an earlier abrasion of the casing and capturing particles. When the predetermined value is greater than the above-identified range, advantage of combustion in the fluidized layer is lessened and when less than the range, an abrasion suppressing effect in the fixed layer is lessened.

In the treating method of a preferred embodiment of the present invention, the capturing particles are adapted to carry at least one of a Nox removal catalyst and a Sox removal catalyst to remove at least one of nitrogen oxide and sulfur oxide contained in the exhaust gas. As the Nox removal catalyst, for example, copper zeolite may be employed. As the Sox removal catalyst, for example, iron sulfide, or calcium oxide may be employed. This makes it possible that the nitrogen oxide or sulfur oxide contained in the exhaust gas from the engine can be absorbed by the capturing particles and combusted together with the carbon solid. For example, the nitrogen oxide is converted into nitrogen and carbon dioxide as non-hazardous substances as a result of combustion and the sulfur oxide is fixed as a non-hazardous substance.

An exhaust gas treating device of the present invention comprises: a collector in which capturing particles for capturing fine particles contained in an exhaust gas are deposited; an exhaust introducing passage for introducing the exhaust gas from below to the collector; a dispersing introducer for ejecting the introduced exhaust gas into the collector through a number of penetrating nozzle holes; and an exhaust introducing passage for discharging the exhaust gas that has passed through the collector upwardly of the collector, wherein the collector is fluidized according to balance between a pressure of the exhaust gas and a gravity of the collector and the fine particles are combusted in a fluidized layer of the collector.

With the above-described constitution, a simplified treating device carrying out the treating method of the present invention is obtained.

In the exhaust gas treating device of the preferred embodiment of the present invention, when a speed of the exhaust gas is lower than a predetermined value required for fluidization of the collector by the exhaust gas, the capturing particles are adapted to capture the fine particles, and when the speed is the predetermined value or more, the collector is fluidized by the exhaust gas and the fine particles are combusted in the fluidized layer.

In the exhaust gas treating device of the preferred embodiment of the present invention, the capturing particles are particles mainly containing alumina, silica, zeolite, zirconia, or a sintered metal as a component. The capturing particles are capable of reliably capturing the fine particles and reliably carrying the NOx removal catalyst or Sox removal catalyst.

In the exhaust gas treating device of the preferred embodiment of the present invention, the capturing particles have a diameter of 200 µm - 1 mm. In this particle diameter range, the fluidization of the capturing particles is facilitated and the fine particles captured by the capturing particles are reliably combusted in the fluidized layer without flying-out of the capturing particles from the fluidized layer. Specifically, when the capturing particles that have captured the fine particles are fluidized, the exhaust gas tends to take away the fine particles from the capturing particles. In general, the drag of the gas given to the powdered material is decreased with a decrease in the particle diameter, whereas adhesion between the fine particles and the capturing particles is not greatly reduced due to van der Waals force regardless of the decrease in the particles diameter. Accordingly, if the average diameter of the capturing particles is set to 200 µm - 1mm, then the capturing particles reside in the fluidized layer without flying out therefrom. As s result, the fine particles captured by the capturing particles are reliably combusted in the fluidized layer.

In the exhaust gas treating device of the preferred embodiment of the present invention, the capturing particles are adapted to carry at least one of a Nox removal catalyst for removing nitrogen oxide contained in the exhaust gas and a Sox removal agent for removing sulfur oxide contained in the exhaust gas.

In the exhaust gas treating device of the preferred embodiment of the present invention, a box filled with an oxidation catalyst (NOx removal catalyst) is provided in an upstream exhaust passage for introducing the exhaust gas to the collector, or an oxidation catalyst (NOx removal catalyst) is applied to a lower surface of the dispersing introducer and an inner surface of the exhaust introducing passage, for converting NO contained in the exhaust gas into NO₂ so as to be utilized as a combustion promoter in the fluidized layer. Thereby, combustion of the fine particles by NO₂ is predominant in the fluidized layer, and a combustion temperature of the fluidized layer is decreased as compared to the case where combustion is conducted under O₂, in the exhaust gas. As a result, the combustion is facilitated at a low temperature. By filling the oxidation catalyst in the box provided at the inlet of the fluidized layer, mechanical abrasion of the oxidation catalyst can be prevented differently from the case where the capturing particles in the fluidized layer carry the oxidation catalyst.

In the exhaust gas treating device of the preferred embodiment of the present invention, partitions comprised of metal plates or wire-meshes are provided for dividing the fluidized layer into a plurality of parts. In particular, the fluidized layer is preferably divided into two or three sectional layers by means of the partitions. When the exhaust gas treating device is inclined, it is possible to suppress the event that the excessive reduction of the height of the fluidized layer on one side portion causes the gas to be blown by. Thereby, when the mobile vehicle on which the exhaust gas treating device is mounted, is traveling on an inclined terrain and the exhaust gas treating device is inclined, the partitions serve to prevent the event that the capturing particles are unevenly distributed on one side because the capturing particles always reside in the sectional layers defined by the partitions, so that the blow-by of the gas due to excessive reduction of the height of the fluidized layer on one side portion does not occur. As result, it is possible to prevent the blow-by of the fine particles in the exhaust gas without contact with the capturing particles, and the fine particles can be reliably captured by the capturing particles and efficiently combusted. By giving the oxidation catalyst capability to the partitions, oxidation of the fine particles in the fluidized layer is promoted.

In the exhaust gas treating device of the preferred embodiment of the present invention, a wire-mesh having meshes with a size smaller than the particle diameter of 200 µm - 1mm of the capturing particles, for example, 40 - 150 meshes, is provided above the fluidized layer as a filter, for preventing the passage of the capturing particles when bubbles are ruptured in the fluidized layer or the exhaust gas treating device shakes. Thereby, the capturing particles flying out at a high speed toward the filter due to the rupture of bubbles in the fluidized layer or the shaking of the mobile vehicle are made to collide with the wire-mesh of the filter, so that without passing through the filter, the capturing particles are returned to the fluidized layer. Therefore, without a reduction in the amount of the capturing particles, the fine particles captured by the capturing particles can be reliably combusted in the fluidized layer.

In the exhaust gas treating device of the preferred embodiment of the present invention, when mounted on a mobile vehicle, a longitudinal direction of the exhaust gas treating device is set to a direction with a small inclination angle that is orthogonal to a traveling directions. When the mobile vehicle travels on a general road, the vehicle frequently travels as being inclined with respect to the traveling direction (longitudinal direction) continuously for a long time as illustrated in traveling on the inclined terrain, although the time during which the vehicle travels continuously as being inclined with respect to the direction (lateral direction) orthogonal to the traveling direction is short. So, by setting the longitudinal direction of the exhaust gas treating device to the direction orthogonal to the traveling direction of the vehicle, the inclination of the dispersing introducer provided in the longitudinal direction of the treating device, that is, uneven distribution of the capturing particles to one side of the dispersing introducer is lessened. As a result, the fine particles can be more efficiently combusted.

In the exhaust gas treating device of the preferred embodiment of the present invention, when the load of the engine and the exhaust gas temperature are low and the fine particles captured by the capturing particles are difficult to combust in the fluidized layer, a fuel secondary injection in a fuel expansion process of the engine is promoted, thereby increasing a temperature of the exhaust gas by after combustion, or a combustor is provided between an outlet of the engine and an inlet of the exhaust gas treating device to re-combust the exhaust gas for a short time intermittently, thereby increasing the temperature of the exhaust gas to promote combustion of the fine particles adhered to the capturing particles. Specifically, when the exhaust gas temperature is low, the fine particles captured by the capturing particles are difficult to combust in the fluidized layer. So, by shifting the timing of fuel supply to increase the temperature of the exhaust gas or conducting combustion in the combustor to increase the exhaust gas temperature, the fine particles can be reliably combusted.

In the exhaust gas treating device of the preferred embodiment of the present invention, the dispersing introducer has a plurality of holes having a hole diameter of 0.3 - 1.0 mm, and the capturing particles are prevented from falling from the holes of the dispersing plate by providing 40 - 150 mesh clearance wire-mesh on the dispersing introducer, making the diameter of the capturing particles larger than a hole diameter of the dispersing introducer, or utilizing a bridge effect obtained by making a plate thickness of the dispersing introducer three times or more as large as the hole diameter. Thereby, since the capturing particles can be held in the fluidized layer without falling from the dispersing introducer, the fine particles can be reliably combusted in the fluidized layer.

In the exhaust gas treating device of the preferred embodiment of the present invention, a device for flying sparks is provided in the exhaust introducing passage, for sequentially combusting fine particles accumulated in the exhaust introducing passage. Thereby, the fine particles accumulated in the exhaust introducing passage can be reduced and the exhaust gas can be easily treated.

In the exhaust gas treating device of the preferred embodiment of the present invention, a diffuser having an enlarged angle within 15 degrees on one side and 30 degrees on both sides is provided upstream of the dispersing introducer, a porous plate provided with a plurality of holes having a hole diameter of 5-15 mm is provided upstream of the dispersing introducer, or a cylindrical or ellipsoidal pipe comprised of a porous plate is inserted into the exhaust introducing passage provided below the dispersing introducer, to suppress uneven flow of the exhaust gas in the fluidized layer. Thereby, the porous plate prevents the uneven flow of the exhaust gas in downstream fluidized layer and allows the exhaust gas to be evenly diffused in the fluidized layer. As a result, the fine particles contained in the exhaust gas can be efficiently captured by the capturing particles.

In the exhaust gas treating device, instead of the flat plate, a cylindrical diffusing pipe is used as the dispersing introducer. With the use of the diffusing pipe, the welded portion of the diffusing pipe to the casing of the exhaust gas treating device can be shortened or otherwise dispensed with. As a result, a manufacturing cost is low.

In the exhaust gas treating device of the preferred embodiment, an interior of the exhaust introducing passage provided below the dispersing introducer is divided into a plurality of parts, and a change valve is provided at an inlet of the divided parts, to change the number of divided parts to be used according to a variation in an exhaust flow of the engine, thereby reducing a ratio between a maximum flow and a minimum flow of the exhaust gas in the parts into which the exhaust gas is flowed. Or otherwise, a plurality of diffusing pipes are provided in the fluidized layer for introducing the exhaust gas into the fluidized layer and a change valve is provided at an inlet of the diffusing pipes, to change the number of diffusing pipes to be used according to variation in the exhaust flow of the engine, thereby reducing a ratio between a maximum flow and a minimum flow of the exhaust gas in the diffusing pipes into which the exhaust gas is flowed. In general, if the dispersing introducer has a sufficient pressure loss, then the variation in the exhaust gas flow from the respective nozzle holes in the dispersing introducer into the fluidized layer can be reduced even if the behavior of a fluidized medium as the capturing particles in the fluidized layer becomes unstable. Since the fluctuation of the load in the fluidized layer device such as a fluidized layer boiler, or a fluidized layer garbage incinerator is normally the minimum load which is equivalent of 50% - 60% of the maximum load, and therefore, it is not difficult to properly maintain the pressure loss of the dispersing introducer during the minimum load. However, the ratio between the exhaust gas flow in the maximum load and the exhaust gas flow in the minimum load of the diesel engine employed in the mobile vehicle is as high as approximately 6 : 1 - 10 : 1. Accordingly, by dividing the interior of the exhaust introducing passage provided below the dispersing introducer into the parts or providing a plurality of diffusing pipes for introducing the exhaust gas into the fluidized layer to always flow the exhaust gas into the parts or diffusing pipes in a predetermined ratio or more with respect to the gas flow in the maximum load, the flow variation in the exhaust gas in the parts or the diffusing pipes can be lessened, thereby maintaining a proper pressure loss in the dispersing introducer or the diffusing pipes and a preferable fluidized state.

In the exhaust gas treating device of the preferred embodiment of the present invention, an interior of the exhaust introducing passage provided below the dispersing introducer is divided into two parts, and a change valve is provided at an inlet of one of the divided parts, to set the amount of gas in the divided parts to 1/2 or more of a set value when the exhaust amount fluctuates in a ratio of 1 : 4 or less. Or otherwise, two diffusing pipes are provided in the fluidized layer for introducing the exhaust gas into the fluidized layer, and a change valve is provided at an inlet one of the diffusing pipes, to set the amount of gas in the diffusing pipes to 1/2 or more of a set value when the exhaust amount fluctuates in a ratio of 1 : 4 or less. When the exhaust gas is flowed into one of the two parts or diffusing pipes, fluidization does not occur in the other part or diffusing pipe into which no gas is flowed and the fixed layer is formed therein, which arises no problem in practical operation.

In the exhaust gas treating device of the preferred embodiment of the present invention, a pressure loss of the dispersing introducer is set to 100 - 2000% of a pressure loss in the fluidized layer in a maximum load. Thereby, the exhaust gas can be uniformly supplied into the fluidized layer even if the load greatly fluctuates or the mobile vehicle shakes.

In the exhaust gas treating device of the preferred embodiment of the present invention, a filter in which a pipe having holes of a diameter of several mm to several tens mm is covered with a 40-150 mesh wire-mesh is provided above the fluidized layer. Thereby, a welded portion of the filter to the casing of the exhaust gas treating device is short or unnecessary and a manufacturing cost is reduced.

In the exhaust gas treating device of the preferred embodiment of the present invention, two or three stages of fluidized layers are provided in series as being surrounded by the same vertical planes. In dust collection of the fluidized layer, when the high-speed gas ejected through the nozzle holes of the dispersing introducer collide with the capturing particles, the fine particles contained in the exhaust gas are easily captured by the capturing particles by inertial collection. So, by providing the two or three stages of fluidized layers as described above, the inertial collection is repeated twice or three times, thereby resulting in high collection efficiency.

In the exhaust gas treating device of the preferred embodiment of the present invention, one or two porous plates or layered wire-meshes are provided in the vicinity of an interface of the fluidized layer. Thereby, when the fluidized medium as the capturing particles are fluidized, this fluidized medium collides with the porous plates or the wire-meshes, or collides with each other while passing through them, thereby causing slow fluidization, so that the fluidized medium is always filled at the outlet of the nozzle holes of the dispersing introducer and capturing efficiency of the fine particles is increased. Once the fine particles are captured in the surface of the fluidized medium, they hardly re-fly out and are combusted before re-flying because of the slow fluidization of the fluidized medium. Besides, since the fluidized medium hardly re-flies from the interface of the fluidized layer, clogging of the filter provided above the fluidized layer is lessened. Specifically, in case of the fluidized medium used as the capturing particles of the fine particles, such as alumina, the medium having the diameter of 0.1 - 0.2 mm has the best fluidized state and the highest capturing capability of the fine particles. In order to prevent the particles from flying out from the fluidized layer when the particles of the fluidizing medium is smaller, it is necessary to reduce a superficial velocity in a column of the fluidized layer, that is, to enlarge the device. On the other hand, by providing the wire-mesh or the porous plate in the vicinity of the interface of the fluidized layer to make the fluidization of the fluidized medium slow, the capturing capability of capturing the fine particles can be enhanced if the device is made small and the particle diameter of the fluidized medium is set to, for example, approximately 0.2 - 1mm. When the porous plate is used, the plate with higher aperture ratio is used in order to minimize the pressure loss.

In the exhaust gas treating device of the preferred embodiment of the present invention, a reactor incorporating a Nox removal catalyst for removing nitrogen oxide contained in the exhaust gas is provided on an outlet side of the exhaust gas treating device. Thereby, a device cost and an operating cost are lowered and dust removal and Nox removal effects are obtained. More specifically, the Nox removal catalyst for removing the nitrogen oxide contained in the exhaust gas of the diesel engine is generally active as a catalyst when the temperature of the catalyst is 200°C or higher, and when the catalyst is lower than this temperature, ash dust contained in the exhaust gas is adhered to the surface of the catalyst, which becomes inactive, so that the catalyst does not act any more and combustion stops. Accordingly, since it is necessary to regulate the engine to keep the exhaust gas temperature at 200°C or higher, the amount of consumed fuel is increased. However, by providing the reactor incorporating the Nox removal catalyst on the outlet side of the exhaust gas treating device as described above, the incapability of catalyst is avoided without the necessity of elevating the exhaust gas temperature to 200°C or higher, that is, supplying an extra fuel to the engine, because the exhaust gas treating device provides a particularly high ash dust removal rate while it is subjected to the low load. As the Nox removal catalyst, an expensive catalyst such as platinum is used. So, if an attempt is made to employ only the NOx removal catalyst to conduct dust removal and Nox removal simultaneously and with high efficiency, a required catalyst is increased and this costs much. On the other hand, when the exhaust gas is made to pass through the exhaust gas treating device and then the nitrogen oxide contained in the exhaust gas is removed by the NOx removal catalyst, a treating device that is compact and has dust removal and NOx removal capability of 80% or more is obtained at a low cost, and an operating cost is low.

In the exhaust gas treating device of the preferred embodiment of the present invention, a reactor containing a particle layer filled with particles having a reducing function for removing nitrogen oxide and sulfur oxide contained in the exhaust gas is provided in a region at a temperature of 60 - 200°C during a continuous operation on an outlet side of the exhaust gas treating device. As the particles, for example, iron carbide (Fe₃ C) is employed. The iron carbide mainly reacts as nitrogen oxide or sulfur oxide in the range of 60 - 200°C and hardly reacts with oxygen in an air. So, the iron carbide can be used as a reducing agent of nitrogen oxide or sulfur oxide.

The iron component of the iron carbide can be used as a material of iron after use. The particles in the reactor may be a fixed layer or a fluidized layer.

In the exhaust gas treating device of the preferred embodiment of the present invention, a filter is provided above the fluidized layer for capturing the capturing particles, and static layer height of the fluidized layer is almost as half as a dimension from the dispersing introducer to the filter, and a fluidized medium is adapted to collide with the filter. Thereby, even if the engine load is low and adhesive ash dust is adhered to the filter, the fluidized medium collide with the filter, thereby preventing the clogging of the filter.

In the exhaust gas treating device of the preferred embodiment of the present invention, a number of cylindrical wire-meshes having a diameter of several mm to several tens mm and having open opposite ends are provided in the fluidized layer, in particular in an upper portion of the fluidized layer as being unfixed. Thereby, particle group going into the wire-mesh temporarily behaves like large-diameter particles and the movement of the fluidized layer on the interface of the fluidized layer is limited, thereby resulting in a fluidized layer that hardly fly out and are being slowly flowed. Consequently, a dust removal efficiency is improved.

In the exhaust gas treating device of the preferred embodiment of the present invention, a primary filter made of a wire-mesh having 40 - 150 meshes and a secondary filter having an oxidation catalyst capability and layered wire-meshes with a size larger than a size of 40 - 150 meshes. Thereby, when ash dust having a small diameter flies from the fluidized layer, it first passes through the primary filter made of the wire-mesh and is then captured by the secondary filter having the oxidation catalyst capability and oxidized, thereby improving dust removal efficiency. As the oxidation catalyst, for example, nickel is used.

Hereinbelow, the preferred embodiments of the present invention will be described with reference to drawings.

### [Brief Description of the Drawings]

Fig. 1 is a side view showing a first embodiment in which an exhaust gas treating device of the present invention is mounted to a diesel engine;
Fig. 2 is a longitudinal sectional view showing an entire structure of the exhaust gas treating device;
Fig. 3 is a front view showing the exhaust gas treating device;
Fig. 4 is a longitudinal sectional view showing part of the treating device showing a state in which collected particles are a fluidized layer;
Fig. 5 is a schematic view showing a state in which the fine particles contained in the exhaust gas are collected;
Fig. 6 is a side view showing an exhaust gas treating device according to a second embodiment;
Fig. 7 is a partially cutaway side view showing an exhaust gas treating device according to a third embodiment;
Fig. 8 is a partially cutaway side view showing another example of the exhaust gas treating device according to the third embodiment;
Fig. 9 is a block diagram showing an engine portion according to a fourth embodiment;
Fig. 10 is a block diagram showing a portion of an exhaust gas treating device according to a fifth embodiment;
Fig. 11 is a partially cutaway side view showing an exhaust gas treating device according to a sixth embodiment;
Fig. 12 is a partially cutaway side view showing an exhaust gas treating device according to a seventh embodiment;
Fig. 13 is a horizontal sectional view showing part of an exhaust gas treating device according to an eighth embodiment;
Fig. 14 is a longitudinal sectional view showing part of an exhaust gas treating device of a ninth embodiment;
Fig. 15 is a partially cutaway side view showing an exhaust gas treating device according to a tenth embodiment;
Fig. 16 is a longitudinal sectional view showing part of an exhaust gas treating device according to an eleventh embodiment;
Fig. 17 is a block diagram showing part of an exhaust gas treating device according to a twelfth embodiment;
Fig. 18 is a longitudinal sectional view showing part of an exhaust gas treating device according to a thirteenth embodiment; and
Fig. 19 is a longitudinal sectional view showing part of an exhaust gas treating device according to a fourteenth embodiment.

### [Best Mode for Carrying out the Invention]

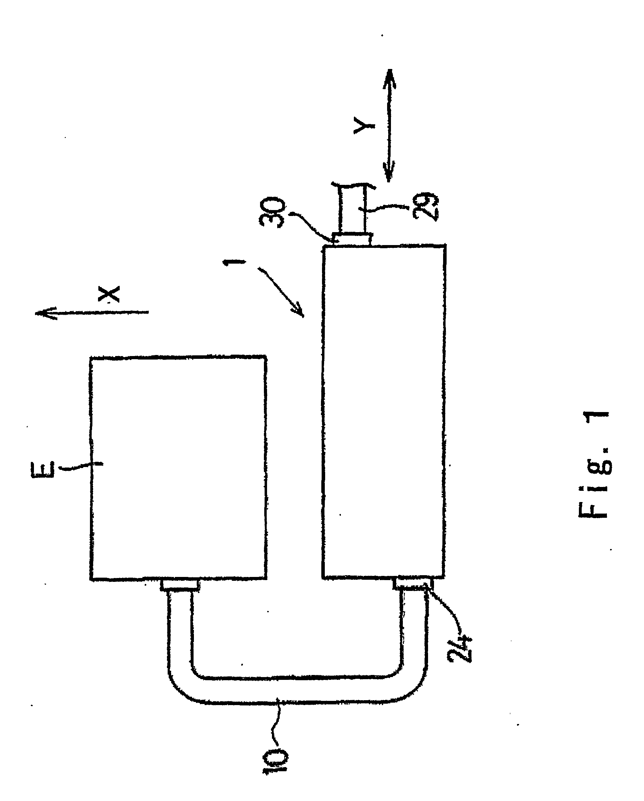

Fig. 1 is a side view of a first embodiment showing an example in which an exhaust gas treating device 1 of the present invention is mounted to a diesel engine E. The exhaust gas treating device 1 is connected to the diesel engine E through an exhaust pipe 10. The longitudinal direction of the exhaust gas treating device 1 is a direction Y orthogonal to a traveling direction X of a vehicle on which the diesel engine E is mounted.

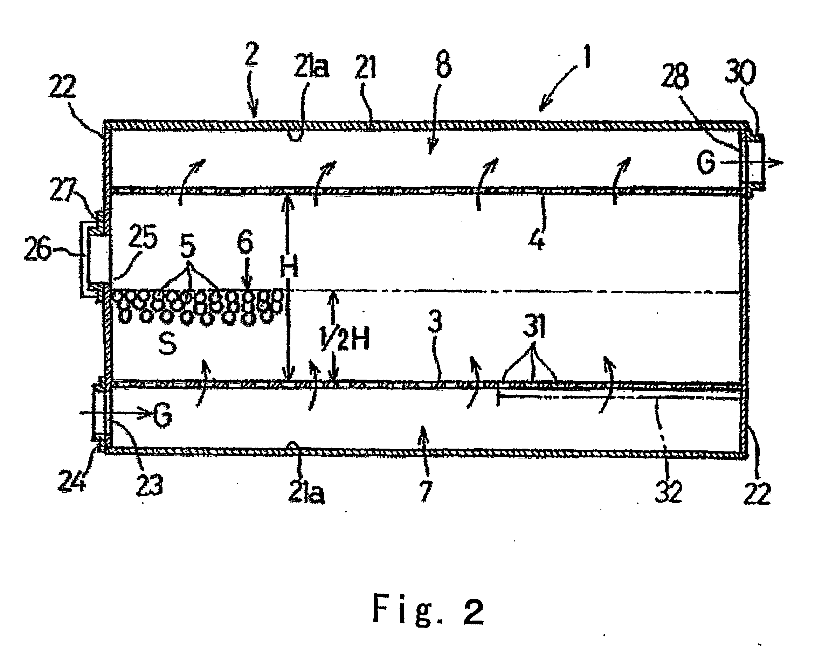

Fig. 2 is a longitudinal sectional view showing an entire structure of the exhaust gas treating device 1. The treating device 1 comprises a cylindrical body 21, and a casing 2 comprised of end plates 22 provided on opposite sides in the longitudinal direction thereof. A flat dispersing plate 3 having a number of penetrating nozzle holes 31 at regular intervals is provided as a dispersing introducer on a lower side inside of the casing 2, and a flat filter 4 is provided on an upper side inside of the casing 2 as having predetermined spacing between the filter 4 and the inner face 2 1a such that the flat filter 4 is placed in parallel with the dispersing plate 3. A collector 6 comprised of numerous capturing particles 5 for capturing fine particles (carbon solid) containing carbon included in an exhaust gas G from the engine E is accommodated in a space surrounded by the dispersing plate 3 and the filter 4 in the casing 2.

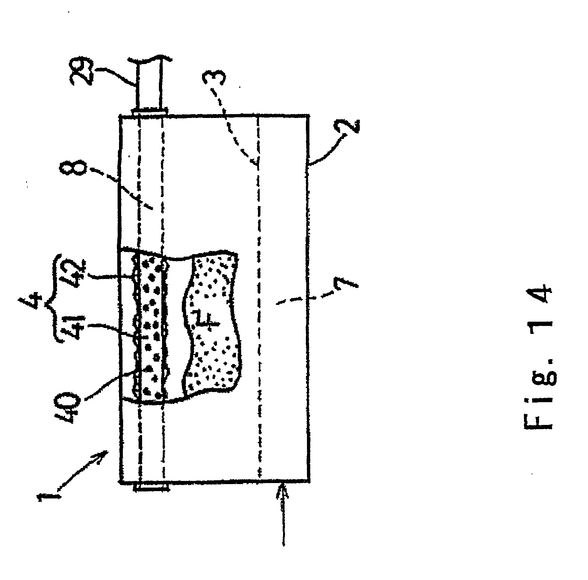

The hole diameter of the nozzle holes 31 of the dispersing plate 3 may be smaller or larger than the capturing particles 5 and is set to about 0.3-1 mm herein. The nozzle holes 31 are formed at pitch intervals of about 2-10 mm. When the nozzle hole diameter is larger than the outer diameter of the capturing particles 5, as shown in a imaginary line of Fig. 2, a wire-mesh 32 having 40 -150 mesh (hole diameter: approximately 100-400 µm) clearances is provided along a lower surface or an upper surface of the dispersing plate 3, in order to prevent the capturing particles 5 from falling from the nozzle hole 31. Thereby, the capturing particles 5 are always made to reside above the dispersing plate 3. Other than the flat plate, the dispersing plate 3 may have various known shapes such as an arc, a triangle, or the like in cross section. As the dispersing introducer, the dispersing plate 3 may be replaced by a cylindrical diffusing pipe (see Fig. 14). When the diffusing pipe is used, a welded portion of the dispersing plate 3 to the casing 2 is short or unnecessary. Thereby, thermal stress is suppressed and a manufacturing cost is reduced.

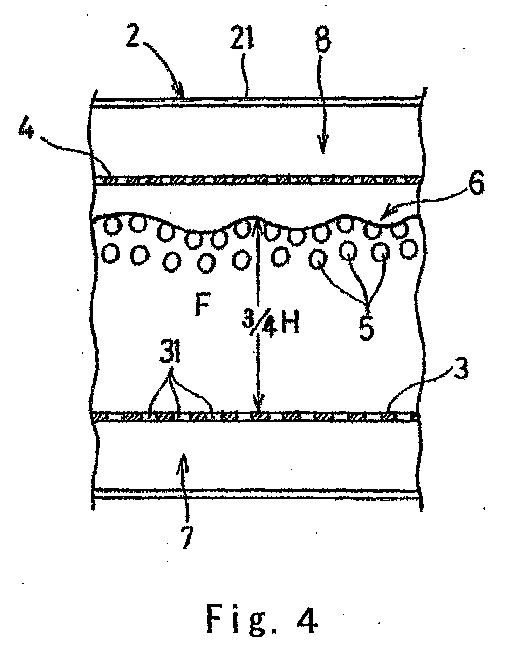

The capturing particles 5 are preferably comprised of particles of sintered powdered metal such as alumina, silica, zeolite, zirconia, or stainless and have a particle diameter of 200 µm - 1 mm. By using porous particles or surface-roughened particles as the capturing particles 5, a Nox removal catalyst such as copper zeolite for removing nitrogen oxide in the exhaust gas G, or a Sox removal catalyst such as iron sulfide and calcium oxide for removing sulfur oxide is easy to carry. By carrying these catalysts in the capturing particles 5, Nox or Sox in the exhaust gas G can be removed. By setting the particle diameter to the above range, the fluidization of the capturing particles 5 can be facilitated and the flying-out of the capturing particles 5 from the fluidized layer F (Fig. 4) is suppressed, so that the fine particles captured by the capturing particles 5 are reliably combusted in the fluidized layer F. In general, the fluidized layer F with fine particles adhered to large particles and being fluidized therein is called a particulate fluidized layer. As a reported characteristic thereof, it is known that the fine particles of 1 µm or less hardly fly out and reside in the fluidized layer F.

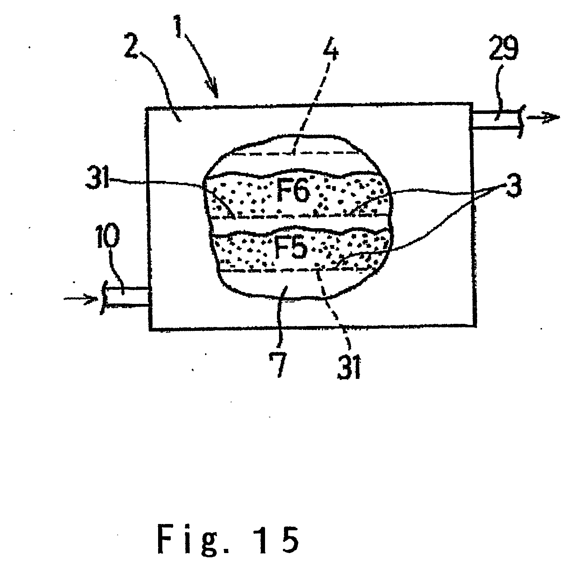

As the filter 4, a wire-mesh having 40-150 meshes (corresponding to approximately 10 0 - 400 µm aperture) with a size smaller than the particle diameter 200 µm - 1 mm of the capturing particles 5 is used and provided above the fluidized layer F, that is, downstream of the collector 6 (gas outlet side). The gas that has passed through the fluidized layer F is made to travel through the filter 4, and the capturing particles 5 flying out at a high speed on a straight-line toward the filter 4 due to the rupture of bubbles in the fluidized layer F or the shaking of a mobile vehicle are made to collide with the meshes of the wire-mesh, so that without passing through the filter 4, the capturing particles 5 are returned to the fluidized layer F, where the fine particles captured by the capturing particles 5 are efficiently combusted. As the filter 4, a porous plate having a number of small penetrating holes smaller than an averaged particle diameter of the capturing particles 5 may be employed. As the filter 4, a pipe having holes of a diameter of several mm to several tens mm and covered with a wire-mesh of 40-150 meshes may be employed (see Fig. 15). With this constitution, a welded portion of the filter 4 to the casing 2 is short or unnecessary. As a result, thermal stress is suppressed and a manufacturing cost is reduced.

An exhaust introducing passage 7 is provided between the inner face 21a of the body 21 and the dispersing plate 3 on the lower side inside of the casing 2, for introducing the exhaust gas G from forward of the casing 2 (left side of Fig. 2) to below of the collector 6 and an exhaust discharging passage 8 is provided between the casing inner face 21a and the filter 4 on the upper side inside of the interior of the casing 2, for discharging the exhaust gas G that has passed through the collector 6 upwardly and then rearwardly (right side of Fog. 2). In this case, a box may be provided on a lower side of the dispersing plate 3 of the casing 2 and the inside thereof may be used as the exhaust introducing passage 7.

The exhaust introducing passage 7 is, as shown in Fig. 2, provided with an ignition plug 41 as a device that gives sparks to the fine particles accumulated in the exhaust introducing passage 7. The provision of the ignition plug 41 enables the more complete combustion of the fine particles contained in the exhaust gas G.

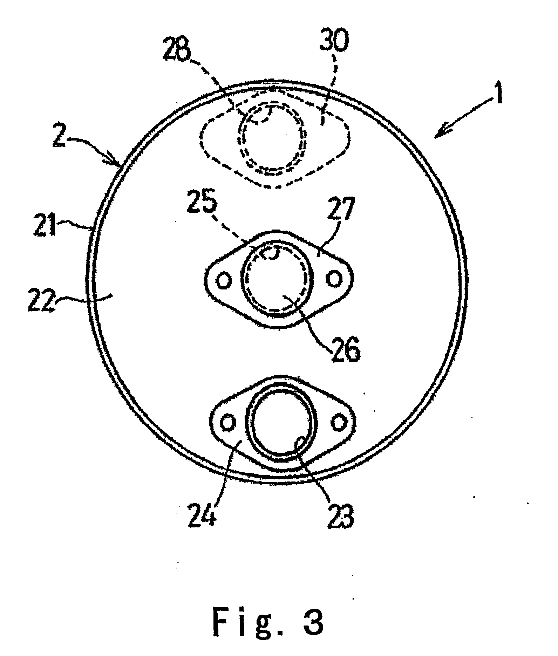

As shown in Fig. 3, in the treating device 1, the casing 2 is entirely cylindrical similarly to a general silencer of the diesel engine and is replaceable by the muffler. The casing 2 may be a humilis ellipsoidal or square other than cylindrical.

The casing 1 of Fig. 2 is provided with an introducing port 23 of the exhaust gas G on a lower side portion at one end 22 so as to communicate with the exhaust introducing passage 7 and a connecting flange 24 is mounted on an outer side of the introducing port 23 for connection of the exhaust tube 10. There is formed a filling hole 25 at a central portion of the end plate 22 of Fig. 3, through which the capturing particles 5 are filled, and maintenance and inspection are conducted. A flange 27 is mounted to the filling hole 25 so as to mount a lid member 26 for closing the filling hole 25. The casing 1 is further provided with a discharge port 28 of the exhaust gas G in an upper portion of the other end plate 22 of Fig. 2 so as to communicate with the exhaust introducing passage 8. A connecting member 30 is mounted to the outer side of the introducing port 28 for connection of a discharge pipe 29 (Fig. 1).

The collector 6 is fluidized according to a balance between its gravity and a pressure of the exhaust gas G. Specifically, when the speed of the exhaust gas G is lower than a predetermined value required for fluidization of the collector 6 by the exhaust gas G, the collector 6 is a fixed layer S with the capturing particles 5 deposited above the dispersing plate 3 as shown in Fig. 2. When the speed of the exhaust gas G becomes the predetermined value or larger, the collector 6 is fluidized according to the speed of the exhaust gas G to be formed into the fluidized layer F with the capturing particles 5 floatingly dispersed inside of the casing 2 as shown in Fig. 4. In this case, the predetermined value is set in a range of 0.1-0.5 m/s. Assuming that the height from the dispersing plate 3 to the filter 4 of Fig. 2, more specifically, the height from a nozzle outlet (upper face of the dispersing plate) of the dispersing plate 3 to the filter 4 is H, the height of the fixed layer S, i.e., static height of the fluidized layer F is set to about 1/2H and the fluidized layer F is set to about 3/4H as shown in Fig. 4.

Subsequently, a method for treating the exhaust gas using the above treating device 1 will be explained.

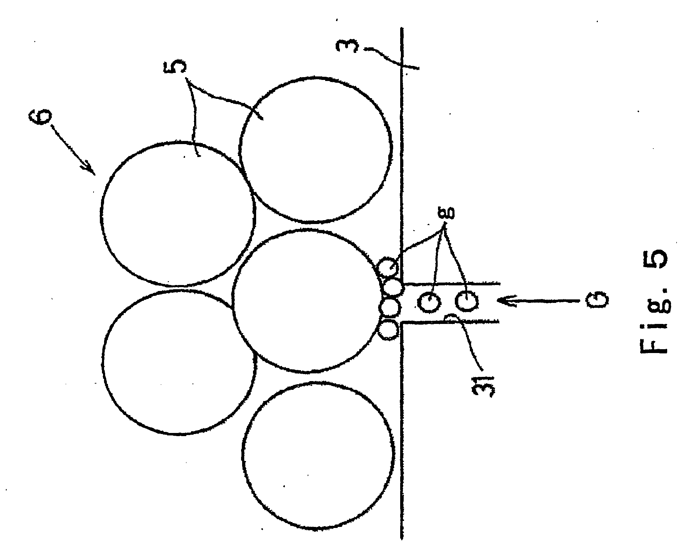

Fig. 5 is a schematic view showing a case where fine particles g of a carbon solid contained in the exhaust gas G are removed. In many cases, the fine particles g have a particle diameter of 1 µm or less. The exhaust gas G discharged from the diesel engine E of Fig. 1 is first sent to the exhaust introducing passage 7 of the casing 2 of Fig. 2 through the exhaust pipe 10. Then, the exhaust gas G is ejected toward the capturing particles 5 through the nozzle holes 31 of the dispersing plate 3. At this time, part of a speed energy owned by the exhaust gas G is converted into a kinetic energy by the nozzle holes 31 and the exhaust gas G is ejected at a speed of approximately 20 - 250m × s - 1 toward the capturing particles 5 through the nozzle holes 31, The dispersing plate 3 is generally adapted to have about 10-20 % pressure loss with respect to the pressure loss in the fluidized layer portion. In the device of the present invention, since the height of the fluidized layer F is as low as several tens mm and, a load greatly fluctuates and the fluidized layer F tends to be unstable, the dispersing plate 3 is adapted to have about 100-2000% pressure loss. Thereby, the exhaust gas G is accelerated by the pressure loss and ejected at a uniform speed toward the capturing particles 5. Consequently, even if the load greatly fluctuates or the mobile vehicle shakes, the exhaust gas can be uniformly supplied into the fluidized layer F.

When the amount of the generated exhaust gas G is small at the activation of the engine E or in an idling state of the engine E, and the amount of generated fine particles g of the exhaust gas G is correspondingly small, the gravity of the capturing particles 5 is greater than the pressing force against the capturing particles 5 based on the pressure of the exhaust gas G and the capturing particles 5 are formed into the fixed layer S deposited on the dispersing plate 3 as shown in Fig. 2. The fine particles g in the exhaust gas G ejected through the nozzle holes 31 of Fig. 5 collide with the respective capturing particles 5 above the dispersing plate 3 and are captured by them. In this case, if the capturing particles 5 are porous or have a roughened surface, for example, fibrous, the fine particles g can be more reliably captured.

When the engine speed of the engine E is increased and the pressure of the exhaust gas G is increased, the capturing particles 5 of the collector 6 are fluidized by the pressure as shown in Fig. 4, that is, the capturing particles 5 are floatingly dispersed. The new capturing particles 5 are circulated and sequentially supplied to the vicinity of the nozzle holes 31, and the fine particles g contained in the exhaust gas G are efficiently captured. When the engine speed of the engine E is increased and a load is increased, the temperature of the exhaust gas G is elevated, so that the fine particles g captured by the capturing particles 5 in the fixed layer S or the fluidized layer F are quickly combusted by the residual oxygen in the exhaust gas G over the entire region of the fluidized layer F. The fine particles g are removed from the capturing particles 5 as the result of combustion, and the resulting capturing particles 5 are fluidized and reach the nozzle holes 31 again, where they contribute to the capturing of new fine particles g. At this time, in a region of the fluidized layer F at a temperature of around 240°C - 450°C, combustion of the fine particles g by NO₂ contained in the exhaust gas G is predominant, while in a region of the fluidized layer F at a temperature of 450°C or higher, combustion of the fine particles g by O₂ contained in the exhaust gas G is predominant.

As described above, by converting the capturing particles 5 into the fixed layer S or the fluidized layer F to minimize the time during which the capturing particles 5 are being fluidized, abrasion of the casing 2 in contact with the capturing particles 5 and abrasion of the capturing particles 5 in contact with one another are suppressed.

The exhaust gas G has a vibration sound which is eliminated by giving a momentum to the capturing particles 5 in the fluidized layer F by pressure vibration of the exhaust gas G. That is, the capturing particles 5 receive kinetic energy and its vibration is attenuated and converted into heat while traveling through the fluidized layer F. Thereby, the noise of the exhaust gas G is converted into heat and eliminated in the fluidized layer F.

The exhaust gas G whose fine particles g have been removed, is now clean and goes away from the fluidized layer F of the collector 6. The exhaust gas G travels through the filter 4 and the exhaust introducing passage 8, and then is discharged to the outside through the discharge pipe 29.

The longitudinal direction of the exhaust gas treating device 1 is the direction Y orthogonal to the traveling direction X of the vehicle. When the mobile vehicle travels on a general road, the frequency at which the vehicle travels continuously as being inclined with respect to the direction Y (lateral direction) is less. So, the inclination of the dispersing plate 3 with respect to the longitudinal direction of the treating device 1, that is, uneven distribution of the capturing particles 5 to one side of the dispersing plate 3 is prevented. As a result, the fine particles g can be reliably captured by the capturing particles g and can be more efficiently combusted.

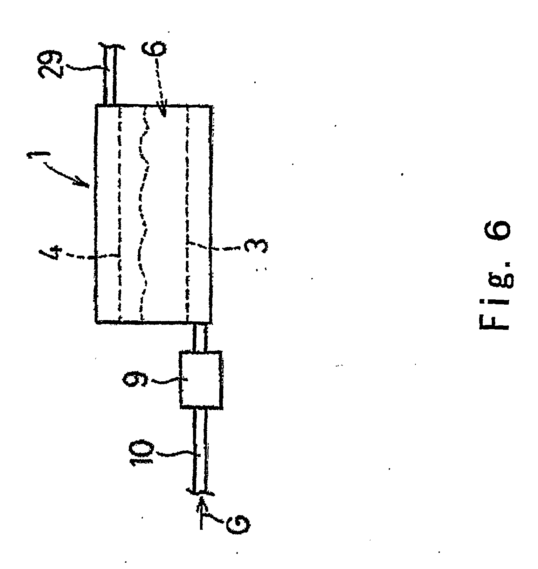

In a second embodiment of Fig. 6, a box 9 filled with an oxidation catalyst (Nox removal catalyst) is mounted to an upstream exhaust passage through which the exhaust gas G is introduced to the collector 6, for example; an exhaust pipe 10 of the engine E (inlet of the fluidized layer F), for the purpose of converting NO contained in the exhaust gas into NO₂ by using the oxidation catalyst so as to be employed as a combustion promoter, and under the NO₂, the fine particles g are combusted. Under NO₂, the combustion of the fluidized layer F is promoted as compared to the combustion under O₂ in the exhaust gas G as described above. Therefore, the fine particles g can be combusted at a low temperature. By filling the oxidation catalyst in the box 9 provided at the inlet of the fluidized layer F as described above, mechanical abrasion of the oxidation catalyst can be prevented differently from the case where the capturing particles being fluidized carry the oxidation catalyst. To conduct combustion at a low temperature, the oxidation catalyst may be applied to the inside of a blast box at a lower face of the dispersing plate 3.

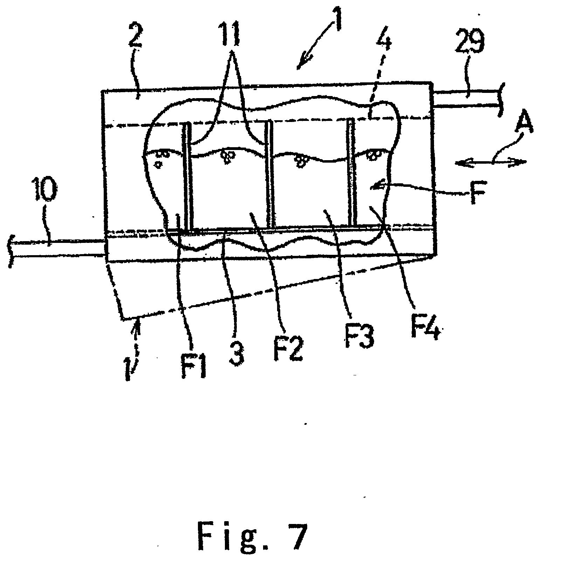

In a third embodiment of Fig. 7, a plurality of vertically extending partitions 11 are mounted at equal intervals in the longitudinal direction A between the dispersing plate 3 and the filter 4 in the fluidized layer F, for defining a plurality of sectional layers F1 - F4 along a certain direction such as the longitudinal direction A of the cylindrical casing 2 . As the partitions 11, metal plates or wire-meshes are suitably used. With this constitution, by conforming the longitudinal direction A to the front and rear direction of the vehicle, when the mobile vehicle is traveling on an inclined terrain and the exhaust gas treating device 1 is inclined toward the longitudinal direction A as shown in alternate long and two short dashes lines, the partitions 11 serve to prevent the event that the capturing particles 5 are unevenly distributed on one side of the longitudinal direction and the height of the fluidized layer F becomes too low on the other side, because the capturing particles 5 always reside in the sectional layers defined by the partitions 11. Thereby, it is possible to prevent the blow-by of the fine particles g contained in the exhaust gas G without partial contact with the capturing particles 5, and the fine particles g can be reliably captured by the capturing particles 5 and efficiently combusted. It should be noted that the partitions 11 may be shortened and mounted to the dispersing plate 3 as having a clearance between an upper end of the partitions 11 and the filter 4.

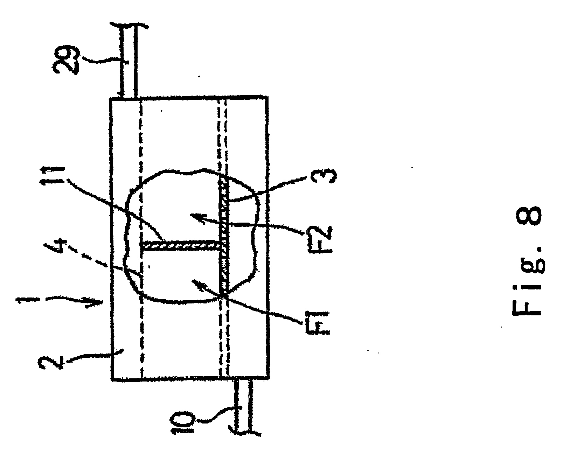

As shown in an embodiment of Fig. 8, more suitably, the partitions 11 are used to divide the interior of the fluidized layer F into two sectional layers F1, F2 by means of the partitions 11. Alternatively, the fluidized layer F may be divided into three sectional layers by means of the partitions 11.

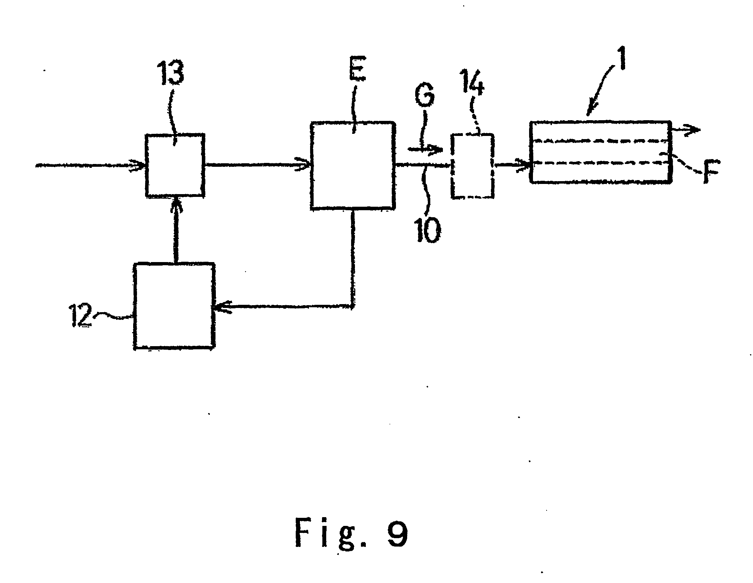

In a fourth embodiment of Fig. 9, when the load of the engine E is low over a certain time period and the temperature of the exhaust gas G is low, this is detected and fuel secondary injection in a combustion expansion process of the engine E is promoted to elevate the temperature of the exhaust gas G to thereby combust the fine particles g adhered to the capturing particles 5 in after combustion. Specifically, the engine speed of the engine E is input to a controller 12 for controlling the engine E and a continuation time during which the engine speed is a predetermined value or less is detected by a timer in the controller 12. When the continuation time reaches the predetermined time, a fuel valve 13 is controlled by an output from the controller 12 to promote the fuel secondary injection in the fuel expansion process of the engine E during a certain time period. Since the load of the engine E is proportional to the engine speed of the engine E during constant speed traveling, that is, over a long time span except rapid acceleration or traveling on a sloping road, the load of the engine E can be easily detected by detecting the engine speed. The engine speed of the engine E is detected by using an engine revolution indicator generally mounted in the vehicle and a converter.

With this constitution, when the temperature of the exhaust gas G is low, and the fine particles captured by the capturing particles are difficult to combust in the fluidized layer F, the fuel secondary injection in the fuel expansion process of the engine E is promoted to thereby elevate the temperature of the exhaust gas G, thereby promoting the combustion of the fine particles. Instead of thus increasing the fuel supply, a combustor 14 maybe provided between the engine E and the exhaust gas treating device 1 as shown in an alternate long and two short dashes line, for combusting the exhaust gas G of the engine E to cause the temperature of the exhaust gas G to be increased. Specifically, in the fluidized layer F, the fine particles are thinly dispersed on and adhered to surfaces of the capturing particles 5, and combustion is conducted at a lower temperature without forming a boundary film due to contact between the particles. For example, if the temperature is kept at 500°C for 5 minutes, the fine particles 1 µ m thick which are adhered to the surfaces of the capturing particles 5 are completely combusted.

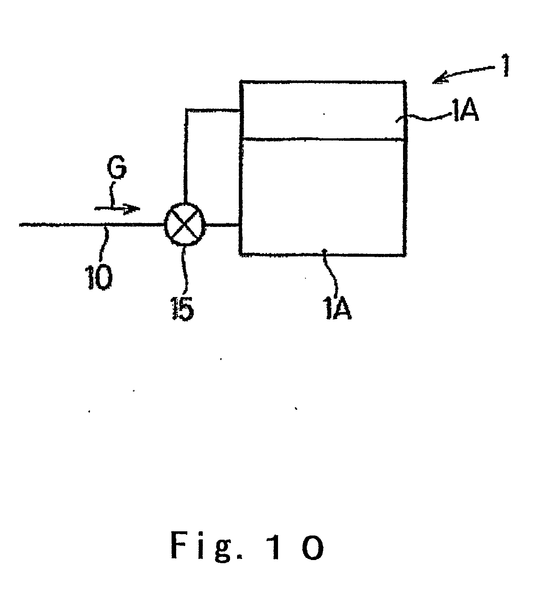

In a fifth embodiment of Fig. 10, the exhaust gas treating device 1 is divided into two parts 1A, 2A having different cross sections of the dispersing plate 3 and a three-way change valve 15 is provided on inlet sides of the treating devices 1A, 2A. Switching between these treating devices is performed according to a variation in the exhaust flow of the engine E to reduce the ratio between the maximum flow and the minimum flow into the treating devices 1A, 2A. Specifically, the engine speed proportional to the exhaust flow is detected, and when the engine speed is less than a predetermined value, the exhaust gas G is supplied only to the treating device 1A, while when the engine speed is the predetermined value or more, the treating device A is switched to the treating device 2A having the dispersing plate 3 of the cross section larger than that of the treating device 1A. Further, when the amount of the exhaust gas is increased, the exhaust gas G is supplied to the exhaust gas treating devices 1A, 2A. In other words, according to an increase in the exhaust flow, the number of the treating devices 1A, 2A to be used is increased. Thereby, the flow variation in the exhaust gas G flowing into the exhaust gas treating devices 1A, 2A per cross section is lessened, so that the combustion of the fine particles can be efficiently conducted. Three or more exhaust gas treating devices 1A, 2A may be provided.

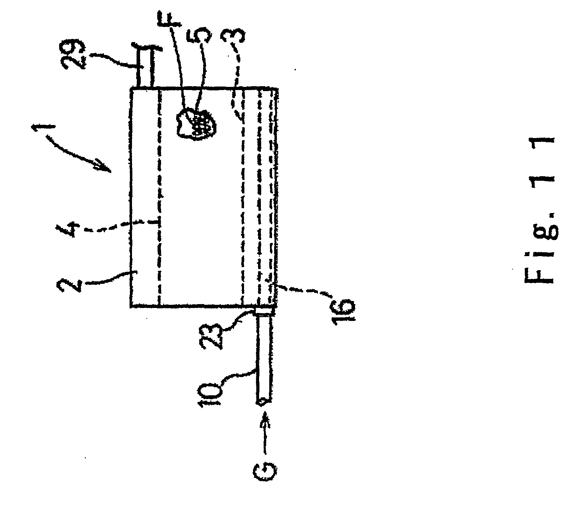

In a sixth embodiment of Fig. 11, to prevent the uneven flow of the exhaust gas G in the fluidized layer F of the exhaust gas treating device 1, a cylindrical or ellipsoidal pipe 16 provided with a number of holes having a hole diameter of 5 - 15 mm is inserted into the exhaust introducing passage 7 upstream of the dispersing plate 3. An introducing port 23 to which the exhaust pipe 10 of the exhaust gas G is connected is provided at the center of a lower portion of the casing 2 of the treating device 1, and the pipe 16 is inserted into the exhaust introducing passage 7 through the introducing port 23. This constitution allows the pipe 16 to prevent the uneven flow of the exhaust gas G, thereby permitting the exhaust gas G to be evenly diffused in the fluidized layer F. As a result, the fine particles contained in the exhaust gas G are reliably captured by the capturing particles 5. The pipe 16 placed in the exhaust introducing passage 7 may be replaced by a porous plate provided with a number of holes having a hole diameter of 5-15 mm. Or otherwise, a diffuser having an enlarged angle within 15 degrees on one side and 30 degrees on both sides may be installed at the exhaust introducing port.

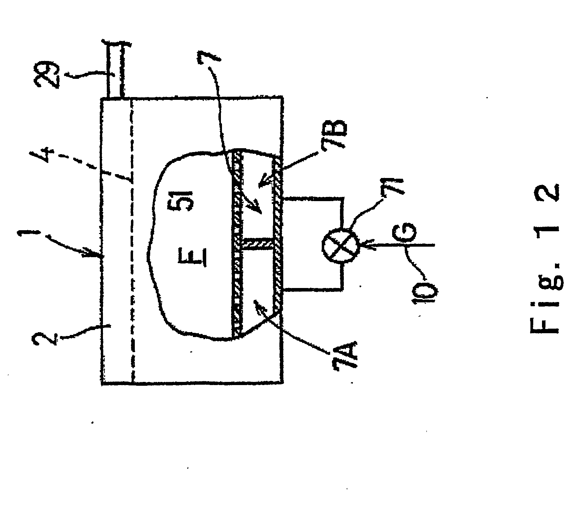

In a seventh embodiment of Fig. 12, the interior of the exhaust introducing passage 7 provided below the dispersing plate 3 is divided into two parts 7A, 7B in the ratio of 1 : 1 by the partitions 51, and a change valve 71 is provided at inlet sides of the parts 7A, 7B. When the exhaust amount of the engine varies in the ratio of 1 : 4 or less, the amount of the gas passing through the divided parts 7A, 7B is always set to 1/2 or more of the set value. The ratio of the parts 7A, 7B may be set to 1 : 2. When the ratio of the variation in the exhaust flow is 1 : 6, the amount of the gas passing through the parts 7A, 7B may be always set to 1/2 or more of the set value.

By dividing the interior of the exhaust introducing passage 7 provided below the dispersing plate 3 into the two parts 7A, 7B and changing the ratio between the parts 7A and 7B to be used by means of the change valve 71 depending on the variation in the exhaust flow of the engine, the ratio between the maximum flow and the minimum flow of the exhaust gas flowing into the parts 7A. 7B is reduced. That is, in general, if the dispersing plate 3 has a sufficient pressure loss, then the variation in the exhaust gas flow from each of the nozzle holes 31 in the dispersing plate 31 is reduced even if the behavior of a fluidized medium as the capturing particles 5 in the fluidized layer F becomes unstable. The load fluctuation in the general fluidized layer device is normally a minimum load which is equivalent of 50%-60% of a maximum load, and therefore, it is not difficult to properly maintain the pressure loss of the dispersing plate 3 during the minimum load. However, the ratio between the exhaust gas flow in the maximum load and the exhaust gas flow in the minimum load of the diesel engine employed in the mobile vehicle is as large as approximately 6 : 1 - 10 : 1. Accordingly, by dividing the interior of the exhaust introducing passage 7 provided below the dispersing plate 3 into the parts 7A, 7B and by always flowing the exhaust gas into the parts 7A, 7B in a predetermined ratio or more with respect to the gas flow in the maximum load, the flow variation in the exhaust gas in the parts 7A, 7B can be reduced, thereby maintaining a proper pressure loss in the dispersing plate 3 and a preferable fluidized state.

The interior of the exhaust introducing passage 7 may be divided into three parts in the ratio ranging from 1 : 2 : 6 to 1 : 1 : 1 and inlets of the respective divided parts are provided with a change valve, for always flowing the gas through the parts at a flow of 1/2-3/5 or more of a set value, although this is not shown.

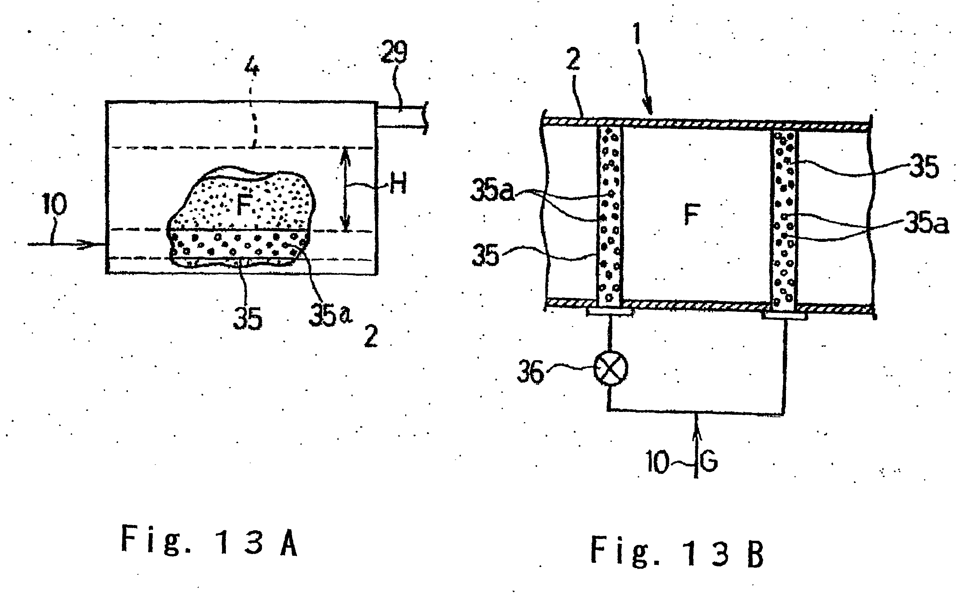

In an eighth embodiment of Fig. 13, as the dispersing introducer, the dispersing plate 3 is replaced by a diffusing pipe 35 provided with many aperture holes (nozzle holes) on a peripheral face thereof, for introducing the exhaust gas G into the fluidized layer F. A plurality of, for example, two, diffusing pipes 35 are mounted so as to horizontally penetrate through a lower portion of the fluidized layer F from a side wall of the casing 2 to an opposite face, and a valve 36 is provided on an inlet side of one of the two diffusing pipes 35 and opened/closed depending on a variation in the exhaust flow of the engine, thereby reducing the ratio between the maximum flow and the minimum flow of the exhaust gas in the diffusing pipes 35 into which the exhaust gas is flowed. Also in this case, the flow variation in the exhaust gas in the diffusing pipes 35 into which the exhaust gas is flowed can be reduced, so that the proper pressure loss of each of the diffusing pipes 35 and a preferable fluidized state can be maintained. Similarly to the case where the interior of the exhaust introducing passage 7 is divided into three or four parts as shown in Fig. 12, three or four diffusing pipes 35 may be mounted so as to horizontally penetrate through the fluidized layer F from the side wall of the casing 2 to the opposite face. Also, an input valve may be provided for each of the inlets or for each pipe group of the diffusing pipes. Further, the input valve 36 may be dispensed with or the number of the diffusing pipes 35 may be one.

In a ninth embodiment of Fig. 14, the filter 4 comprised of a pipe 41 provided with holes 40 having a diameter of several mm to several tens mm and a 40 - 150 mesh wire-mesh covering a periphery thereof is employed. The filter 4 is mounted so as to horizontally penetrate through a space above the fluidized layer F from the side wall of the casing 2 to the opposite face as the exhaust introducing passage 8 above the fluidized layer F. This makes it possible that the welded portion of the filter 4 to the casing 2 of the exhaust gas treating device 1 can be shortened or otherwise can be dispensed with. As a result, the thermal stress is suppressed and a manufacturing cost is low.

In a tenth embodiment of Fig. 15, there is another dispersing plate 3 (or diffusing pipe) provided as being surrounded by the same vertical planes above the dispersing plate 3 (or diffusing pipe), that is, right above the dispersing plate 3, a fluidized layer F5 is provided on the dispersing plate 3 (or around the diffusing plate), and a fluidized layer F6 is provided on the another dispersing plate 3 as being surrounded by the same vertical planes. Sill another dispersing plate 3 may be provided further above as being surrounded by the same vertical planes. That is, three fluidized layers may be provided as being surrounded by the same vertical planes. With this constitution, when the high-speed exhaust gas G ejected through the nozzle holes 31 of the dispersing plate 3 collide with the capturing particles 5, the fine particles g contained in the exhaust gas G are easily captured by the capturing particles 5 due to inertial collection. By providing two or three fluidized layers, the inertial collection is repeated twice or three times. As a result, collection efficiency is increased.

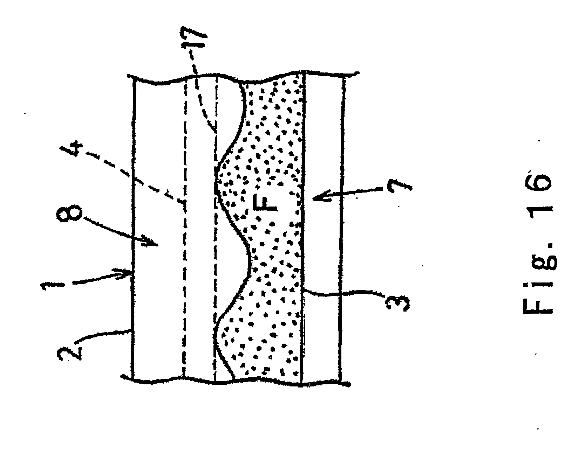

In an eleventh embodiment of Fig. 16, one or two porous plates 17 are provided in the vicinity of an interface of the fluidized layer F. As the porous plate 17, a plurality of layered wire-meshes may be provided. With this constitution, when the fluidized medium as the capturing particles 5 is fluidized, the fluidized medium collide with the wire-mesh or the porous plate 17, or collide with one another when passing through it and is thereby fluidized slowly, so that the fluidized medium is always filled at an outlet of the nozzle holes 31 of the dispersing plate 3, thereby increasing the capturing efficiency. Since the fine particles captured by the surface of the fluidized medium hardly re-fly out and are combusted before re-flying because of the slow fluidization of the fluidized medium. Besides, since the fluidized medium hardly flies from the interface of the fluidized layer F, clogging of the filter 4 provided above the fluidized layer F hardly occurs. Specifically, in case of the fluidized medium such as alumina which is used as the capturing particles for capturing the fine particles, the medium having the diameter of 0.1-0.2 mm has the best fluidized state and the highest capturing capability of the fine particles. In order to prevent the particles from flying from the fluidized layer F when the particles of the fluidizing medium is smaller, it is necessary to reduce a superficial velocity in a column of the fluidized layer, that is, to enlarge the device. On the other hand, by providing the wire-mesh or the porous plate 17 in the vicinity of the interface of the fluidized layer F to make the fluidization of the fluidized medium slow, the capturing capability of capturing the fine particles can be enhanced if the device is made small and the particle diameter of the fluidized medium is set to, approximately 0.2 - 1mm. When the porous plate 17 is used, the plate with higher aperture ratio is selected in order to minimize the pressure loss.

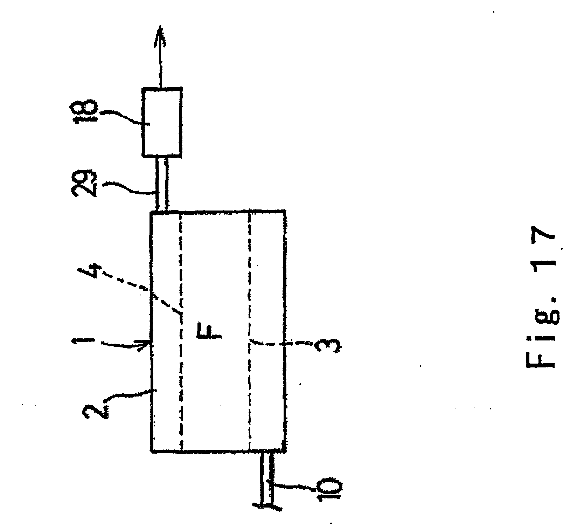

In a twelfth embodiment of Fig. 17, a reactor 18 incorporating the Nox removal catalyst for removing the nitrogen oxide contained in the exhaust gas G is provided on a outlet side of the exhaust gas treating device 1. With this constitution, a device cost and an operation cost are both reduced, and simultaneously, dust removal and Nox removal effects are obtained. The Nox removal catalyst for removing the nitrogen oxide contained in the exhaust gas of the diesel engine is generally active as a catalyst when the temperature of the catalyst is 200°C or higher, and when the catalyst is lower than this temperature, ash dust contained in the exhaust gas is adhered to the surface of the catalyst, which becomes inactive, so that the catalyst does not act any more and combustion stops. Accordingly, since it is necessary to regulate the engine to keep the exhaust gas temperature at 200°C or higher, the amount of consumed fuel is increased. However, by providing the reactor 18 incorporating the Nox removal catalyst on the outlet side of the exhaust gas treating device 1 as described above, the incapability of catalyst is avoided without the necessity of elevating the exhaust gas temperature to 200°C or higher, that is, supplying an extra fuel to the engine, because the exhaust gas treating device 1 provides a particularly high ash dust removal rate while it is subjected to the low load. As the Nox removal catalyst, an expensive catalyst such as platinum is used. So, if an attempt is made to employ only the NOx removal catalyst to conduct dust removal and Nox removal simultaneously and efficiently, a required catalyst is increased and this costs much. On the other hand, when the exhaust gas is made to pass through the exhaust gas treating device 1 and then the nitrogen oxide contained in the exhaust gas is removed by using the Nox removal catalyst in the reactor 18, a treating device being compact and having dust removal and Nox removal capability of 80 % or more is obtained at a low cost and an operating cost is low.

As the reactor 18, a fixed layer or a fluidized layer filled with particles having a reducing effect, for example, iron carbide, may be used, instead of incorporating the NOx removal catalyst.

The iron carbide is originally used as a raw material of iron and when mass-produced, it can be produced at a low cost of about 100 dollars per ton and is economical because it can be used as an iron material after use.

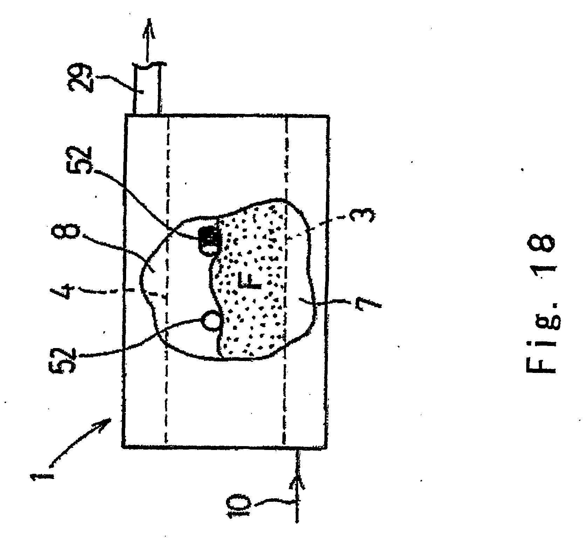

In a thirteenth embodiment shown in Fig. 18, a number of cylindrical wire-meshes 52 having a length and a diameter of several mm to several tens mm and having open opposite ends are provided in the fluidized layer, particularly in the upper portion of the fluidized layer as being unfixed. With this constitution, a particle group going into the wire-meshes 52 temporarily behaves like large diameter particles and the movement of the fluidized layer on the interface of the fluidized layer F is limited, thereby resulting in a fluidized layer that hardly fly out and are slowly being fluidized. Consequently, a dust removal efficiency is improved.

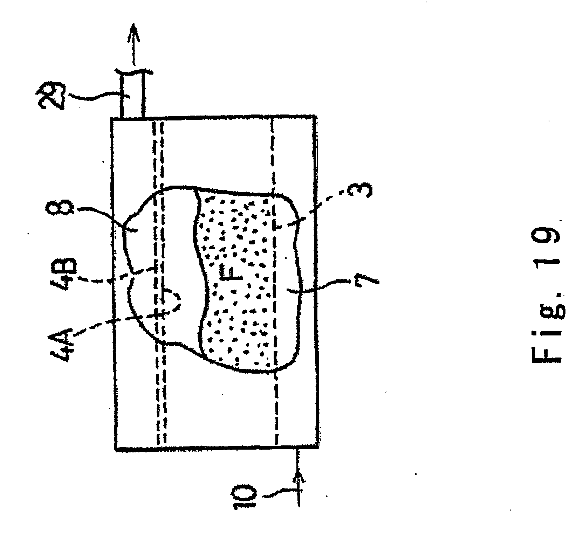

An exhaust gas treating device according to a fourteenth embodiment of Fig. 19 is provided with a primary filter 4A made of a 40-150 mesh wire-mesh that is placed above the fluidized layer and a secondary filter 4B provided above the primary filter 4A. The secondary filter 4B has oxidation catalyst capability and is comprised of layered wire-meshes with a size larger than that of 40 - 150 meshes. With this constitution, when ash dust having a small diameter flies from the fluidized layer, it first passes through the primary filter made of the 40 -150 mesh wire-mesh and is then captured by the secondary filter 4B having the oxidation catalyst capability and oxidized, thereby improving a dust removal efficiency. As the oxidation catalyst, for example, nickel is used and the wire-mesh is coated with nickel.

Moreover, in another embodiment, a static height of the fluidized layer (height of a fixed layer) is almost as half as a height H from the upper face of the dispersing plate 3 to the filter 4 of Fig. 2 or a height H from the upper face (top portion) of the diffusing pipe 35 to the filter 4 of Fig. 13, and when the capturing particles become the fluidized layer F, the fluidized medium collides with the filter 4 to suppress the clogging of the filter 4 of ash dust.

As should be understood from the foregoing, according to the present invention, the fine particles such as carbon solid contained in the exhaust gas can be treated efficiently, easily, and at a low cost.

## Claims

1. A method for treating an exhaust gas by introducing the exhaust gas from below to a collector in which capturing particles for capturing fine particles contained in the exhaust gas are deposited and discharging the exhaust gas upwardly of the collector, comprising:
fluidizing the collector according to a balance between a pressure of the exhaust gas and a gravity of the collector and combusting the fine particles in a fluidized layer of the collector.

2. The method for treating an exhaust gas according to Claim 1, wherein when a speed of the exhaust gas is lower than a predetermined value required for fluidization of the collector by the exhaust gas, the capturing particles are adapted to capture the fine particles, and when the speed is the predetermined value or more, the collector is fluidized by the exhaust gas and the fined particles are combusted in the fluidized layer.

3. The method for treating an exhaust gas according to Claim 1, wherein the capturing particles are adapted to carry at least one of a Nox removal catalyst and a Sox removal catalyst to remove at least one of nitrogen oxide and sulfur oxide contained in the exhaust gas.

4. An exhaust gas treating device comprising:
a collector in which capturing particles for capturing fine particles contained in an exhaust gas are deposited;
an exhaust introducing passage for introducing the exhaust gas from below to the collector;
a dispersing introducer for ejecting the introduced exhaust gas into the collector through a number of penetrating nozzle holes; and
an exhaust introducing passage for discharging the exhaust gas that has passed through the collector upwardly of the collector, wherein
the collector is fluidized according to balance between a pressure of the exhaust gas and a gravity of the collector and the fine particles are combusted in a fluidized layer of the collector.

5. The exhaust gas treating device according to Claim 4, wherein when a speed of the exhaust gas is lower than a predetermined value required for fluidization of the collector by the exhaust gas, the capturing particles are adapted to capture the fine particles, and when the speed is the predetermined value or more, the collector is fluidized by the exhaust gas and the fined particles are combusted in the fluidized layer.

6. The exhaust gas treating device according to Claim 4, wherein the capturing particles are particles mainly containing alumina, silica, zeolite, zirconia, or a sintered metal as a component.

7. The exhaust gas treating device according to Claim 4, wherein the capturing particles have a diameter of 200 µm - 1 mm.

8. The exhaust gas treating device according to Claim 4, wherein the capturing particles are adapted to carry at least one of a Nox removal catalyst for removing nitrogen oxide contained in the exhaust gas and a Sox removal catalyst for removing sulfur oxide contained in the exhaust gas.

9. The exhaust gas treating device according to Claim 4, wherein a box filled with an oxidation catalyst is provided in an upstream exhaust passage for introducing the exhaust gas to the collector, for converting NO contained in the exhaust gas into NO₂ so as to be utilized as a combustion promoter in the fluidized layer.

10. The exhaust gas treating device according to Claim 4, wherein an oxidation catalyst is applied to a lower surface of the dispersing introducer and an inner surface of the exhaust introducing passage, for converting NO contained in the exhaust gas into NO₂ so as to be utilized as a combustion promoter in the fluidized layer.

11. The exhaust gas treating device according to Claim 4, wherein partitions comprised of metal plates or wire-meshes are provided for dividing the fluidized layer into a plurality of sectional layers.

12. The exhaust gas treating device according to Claim 4, wherein a wire-mesh having meshes with a size smaller than a particle diameter of the capturing particles is provided above the fluidized layer as a filter, for preventing passage of the capturing particles when bubbles are ruptured in the fluidized layer or the exhaust gas treating device shakes.

13. The exhaust gas treating device according to Claim 12, wherein the capturing particles have a diameter of 200 µm - 1 mm and the wire-mesh forming the filter has 40 - 150 meshes.

14. The exhaust gas treating device according to Claim 4, wherein when an engine such as an engine or a gas turbine is mounted on a mobile vehicle, a longitudinal direction of the exhaust gas treating device is set to a direction with a small inclination angle that is orthogonal to a traveling direction

15. The exhaust gas treating device according to Claim 4, wherein a fuel secondary injection in a fuel expansion process of the engine such as an engine or a gas turbine is promoted, thereby increasing a temperature of the exhaust gas by after combustion, or a combustor is provided between an outlet of the engine and an inlet of the exhaust gas treating device to re-combust the exhaust gas for a short time intermittently, thereby increasing the temperature of the exhaust gas to promote combustion of the fine particles adhered to the capturing particles.

16. The exhaust gas treating device according to Claim 4, wherein the dispersing introducer has a plurality of holes having a hole diameter of 0.3 - 1.0 mm, and the capturing particles are prevented from falling from the holes of the dispersing introducer by providing 40-150 mesh wire-mesh on the dispersing introducer, making the diameter of the capturing particles larger than a hole diameter of the dispersing introducer, or utilizing a bridge effect obtained by making a plate thickness of the dispersing introducer three times or more as large as the hole diameter.

17. The exhaust gas treating device according to Claim 4, wherein a device for flying sparks is provided in the exhaust introducing passage, for combusting fine particles accumulated in the exhaust introducing passage.

18. The exhaust gas treating device according to Claim 4, wherein a diffuser having an enlarged angle within 15 degrees on one side and 30 degrees on both sides is provided at the exhaust introducing passage, a porous plate provided with a plurality of holes having a hole diameter of 5 - 15 mm is provided upstream of the dispersing introducer, or a cylindrical or ellipsoidal pipe comprised of a porous plate is inserted into the exhaust introducing passage, to suppress uneven flow of the exhaust gas in the fluidized layer.

19. The exhaust gas treating device according to Claim 4, wherein a cylindrical diffusing pipe is used as the dispersing introducer.

20. The exhaust gas treating device according to Claim 4, wherein an interior of the exhaust introducing passage provided below the dispersing introducer is divided into a plurality of parts, or a plurality of diffusing pipes are provided in the fluidized layer for introducing the exhaust gas into the fluidized layer, and a change valve is provided at an inlet of the divided parts or the diffusing pipes, to change the divided parts to be used or the diffusing pipes to be used according to a variation in an exhaust flow, thereby reducing a ratio between a maximum flow and a minimum flow of the exhaust gas in the parts or the diffusing pipes into which the exhaust gas is flowed.

21. The exhaust gas treating device according to Claim 4, wherein an interior of the exhaust introducing passage provided below the dispersing introducer is divided into two parts, or two diffusing pipes are provided in the fluidized layer for introducing the exhaust gas into the fluidized layer, and a change valve is provided at an inlet of the divided parts or the diffusing pipes, to set the amount of gas in the divided parts or the diffusing pipes to 1/2 or more of a set value when the exhaust flow fluctuates in a ratio of 1 : 4 or less.

22. The exhaust gas treating device according to Claim 4, wherein a pressure loss of the dispersing introducer is set to 100 - 2000% of a pressure loss in the fluidized layer in a maximum load.

23. The exhaust gas treating device according to Claim 4, wherein a filter in which a pipe having holes of a diameter of several mm to several tens mm is covered with a 40-150 mesh wire-mesh is provided above the fluidized layer.

24. The exhaust gas treating device according to Claim 4, wherein two or three stages of fluidized layers are provided in series as being surrounded by the same vertical planes.

25. The exhaust gas treating device according to Claim 4, wherein one or two porous plates or layered wire-meshes are provided in the vicinity of an interface of the fluidized layer.

26. The exhaust gas treating device according to Claim 4, wherein a reactor incorporating a Nox removal catalyst for removing nitrogen oxide contained in the exhaust gas is provided on an outlet side of the exhaust gas treating device.

27. The exhaust gas treating device according to Claim 4, wherein a reactor containing a particle layer of a reducing agent for removing nitrogen oxide and sulfur oxide contained in the exhaust gas is provided in a region at a temperature of 60 - 200°C on an outlet side of the exhaust gas treating device.

28. The exhaust gas treating device according to Claim 4, wherein a filter is provided above the fluidized layer for capturing the capturing particles, and static layer height of the fluidized layer is almost as half as a dimension from the dispersing introducer to the filter, and a fluidized medium is adapted to collide with the filter.

29. The exhaust gas treating device according to Claim 4, wherein a number of cylindrical wire-meshes having a diameter of several mm to several tens mm and having open opposite ends are provided in the fluidized layer, in particular in an upper portion of the fluidized layer as being unfixed.

30. The exhaust gas treating device according to Claim 4, wherein a primary filter made of a wire-mesh having 40-150 meshes and a secondary filter having an oxidation catalyst capability and layered wire-meshes having meshes with a size larger than a size of the meshes of the primary filter are provided above the fluidized layer.
